# EUROPEAN PATENT APPLICATION

(11) **EP 2 779 039 A1**
(43) Date of publication of application: **17.09.2014**
(21) Application number: 14159183.4
(22) Date of filing: 12.03.2014
(51) Int. Cl.: G06Q 10/00, H04N 21/00, G06F 17/30, H04W 4/02

(54) **Computing system with content-based alert mechanism and method of operation thereof**

(30) Priority: 15.03.2013 US 201361790238 P
(71) Applicant: Samsung Electronics Co., Ltd., Suwon-si Gyeonggi-do 443-742 (KR)
(72) Inventor: Kuncl, Parker, Los Gatos, CA California 95023 (US); Dhanasarnsombat, Dhana, San Jose, CA California (US); Busse, Daniela, San Francisco, CA California (US)
(74) Representative: Jenkins, Richard Gavin

(57) **Abstract**

A computing system includes a content analysis module configured to detect a content-of-interest; a tracking module, coupled to the content analysis module, configured to identifying a user-location relative to the content-of-interest; a device selection module, coupled to the tracking module, configured to determine an alert device identification based on a viewing area and the user-location for accessing a device; and an alert module, coupled to the device selection module, configured to generate an active-content notification with the alert device identification regarding the content-of-interest for displaying on the device.

## Description

### CROSS-REFERENCE TO RELATED APPLICATION(S)

This application claims the benefit of U.S. Provisional Patent Application serial number 61/790,238 filed March 15, 2013, and the subject matter thereof is incorporated herein by reference thereto.

### TECHNICAL FIELD

An embodiment of the present invention relates generally to a computing system, and more particularly to a system for providing content-based alerts.

### BACKGROUND

Modem consumer and industrial electronics, especially devices such as computer systems, televisions, projectors, cellular phones, portable digital assistants, and combination devices, are providing increasing levels of functionality to support modem life including supporting user tasks. Research and development in the existing technologies can take a myriad of different directions.

The increasing demand for information in modem life requires users to access information at any time, with variety of consumer devices allowing for increased functionalities. However, the growth in functionality has also become distractions for performing desired tasks.

Thus, a need still remains for a computing system with content-based alert mechanism. In view of the ever-increasing commercial competitive pressures, along with growing consumer expectations and the diminishing opportunities for meaningful product differentiation in the marketplace, it is increasingly critical that answers be found to these problems. Additionally, the need to reduce costs, improve efficiencies and performance, and meet competitive pressures adds an even greater urgency to the critical necessity for finding answers to these problems.

Solutions to these problems have been long sought but prior developments have not taught or suggested any solutions and, thus, solutions to these problems have long eluded those skilled in the art.

### SUMMARY

An embodiment of the present invention provides a computing system, including: a content analysis module configured to detect a content-of-interest; a tracking module, coupled to the content analysis module, configured to identifying a user-location relative to the content-of-interest; a device selection module, coupled to the tracking module, configured to determine an alert device identification based on a viewing area and the user-location for accessing a device; and an alert module, coupled to the device selection module, configured to generate an active-content notification with the alert device identification regarding the content-of-interest for displaying on the device.

In an embodiment of the present invention, The system as claimed in claim 1 further comprising: an activity module, coupled to the tracking module, configured to determine a user-attention measure relative to the content-of-interest; and wherein: the alert module is configured to generate the active-content notification based on the user-attention measure.

In an embodiment of the present invention, the content analysis module can be configured to determine an idle portion of the content-of-interest and the alert module can be configured to generate the active-content notification based on the idle portion.

In an embodiment of the present invention, the system can further comprise a mechanism selection module, coupled to the device selection module, configured to determine an alert mechanism for generating the active-content notification.

In an embodiment of the present invention, the system can further comprise a playback module, coupled to the alert module, configured to implement a content-delay setting for delayed viewing of the content-of-interest, and the content analysis module can be configured to identify a content break, an idle portion, or a combination thereof for the content-of-interest for eliminating the content break, the idle portion, or a combination thereof during the delayed viewing of the content-of-interest.

In an embodiment of the present invention, the system can further comprise a surrounding-context module, coupled to the tracking module, configured to determine an overall context associated with the content-of-interest, and the alert module can be configured to generate the active-content notification based on the overall context.

In an embodiment of the present invention, the system can further comprise an activity module, coupled to the tracking module, configured to determine a user-context associated with the content-of-interest, and the alert module can be configured to generate the active-content notification based on comparing the user-context and the overall context.

In an embodiment of the present invention, the alert module can be configured to determine an alert magnitude based on the overall context for generating the active-content notification.

In an embodiment of the present invention, the system can further comprise a mechanism selection module, coupled to the device selection module, configured to determine an alert mechanism based on the overall context for generating the active-content notification.

In an embodiment of the present invention, the system can further comprise a channel control module, coupled to the alert module, configured to implement a content-view setting for adjusting a device setting to display the content-of-interest.

An embodiment of the present invention provides a method of operation of a computing system including: detecting a content-of-interest; identifying a user-location relative to the content-of-interest; determining an alert device identification based on a viewing area and the user-location for accessing a device; and generating an active-content notification with the alert device identification regarding the content-of-interest for displaying on the device.

In an embodiment of the present invention, the method can further comprise determining a user-attention measure relative to the content-of-interest, and generating the active-content notification can include generating the active-content notification based on the user-attention measure.

In an embodiment of the present invention, The method can further comprise determining an idle portion of the content-of-interest and generating the active-content notification can include generating the active-content notification based on the idle portion.

In an embodiment of the present invention, generating the active-content notification can include determining an alert mechanism for generating the active-content notification.

In an embodiment of the present invention, the method can further comprise identifying a content break, an idle portion, or a combination thereof for the content-of-interest, and implementing a content-delay setting for delayed viewing of the content-of-interest without the content break, the idle portion, or a combination thereof.

An embodiment of the present invention provides non-transitory computer readable medium including: identifying a user-location relative to the content-of-interest; determining an alert device identification based on a viewing area and the user-location for accessing a device; and generating an active-content notification with the alert device identification regarding the content-of-interest for displaying on the device.

Certain embodiments of the invention have other steps or elements in addition to or in place of those mentioned above. The steps or elements will become apparent to those skilled in the art from a reading of the following detailed description when taken with reference to the accompanying drawings.

### BRIEF DESCRIPTION OF THE DRAWINGS

FIG. 1 is a computing system with device interaction mechanism in an embodiment of the present invention.
FIG. 2 is an example of a display interface of the group-accommodation device.
FIG. 3 is an exemplary block diagram of the computing system.
FIG. 4 is a further exemplary block diagram of the computing system
FIG. 5 is a control flow of the computing system.
FIG. 6 is a flow chart of a method of operation of a computing system in an embodiment of the present invention.

### DETALIED DESCRIPTION

The following embodiment can be used to generate an active-content notification for notifying a user when a content-of-interest starts or resumes. The active-content notification can be communicated to the user through a suitable device as identified by an alert device identification, using a suitable method as identified by an alert mechanism, at an appropriate level as identified by an alert magnitude, or a combination thereof according to an overall context, an interest rating, a user-activity, a user-location, a user-context, a user-attention measure, or a combination thereof. Further the user can be notified specific to relevant portions of the content-of-interest with respect to a content break or an idle portion therein.

The active-content notification based on the overall context, the user context, the user-attention measure, the interest rating, the alert device identification, the alert mechanism, and the alert magnitude provide relevancy, contextual appropriateness, and enhanced noticeability and effectiveness. The active-content notification can be appropriately adjusted through the alert device identification, the alert mechanism, and the alert magnitude to adjust for the overall context, the user context, and the user-attention measure.

The following embodiments are described in sufficient detail to enable those skilled in the art to make and use the invention. It is to be understood that other embodiments would be evident based on the present disclosure, and that system, process, or mechanical changes may be made without departing from the scope of an embodiment of the present invention.

In the following description, numerous specific details are given to provide a thorough understanding of the invention. However, it will be apparent that the invention may be practiced without these specific details. In order to avoid obscuring an embodiment of the present invention, some well-known circuits, system configurations, and process steps are not disclosed in detail.

The drawings showing embodiments of the system are semi-diagrammatic, and not to scale and, particularly, some of the dimensions are for the clarity of presentation and are shown exaggerated in the drawing figures. Similarly, although the views in the drawings for ease of description generally show similar orientations, this depiction in the figures is arbitrary for the most part. Generally, the invention can be operated in any orientation. Where the embodiments have been numbered first embodiment, second embodiment, etc., the ordinal numbering is a matter of descriptive convenience and is not intended to have any other significance or provide limitations for an embodiment of the present invention.

The term "module" referred to herein can include software, hardware, or a combination thereof in an embodiment of the present invention in accordance with the context in which the term is used. For example, the software can be machine code, firmware, embedded code, and application software. Also for example, the hardware can be circuitry, processor, computer, integrated circuit, integrated circuit cores, a pressure sensor, an inertial sensor, a microelectromechanical system (MEMS), passive devices, or a combination thereof.

The term "processing" as used herein includes assembling data structures, transferring data structures, manipulating data structures, and reading and writing data structures. Data structures are defined to be information arranged as blocks, files, input data, system generated data, such as calculated or generated data, and program data.

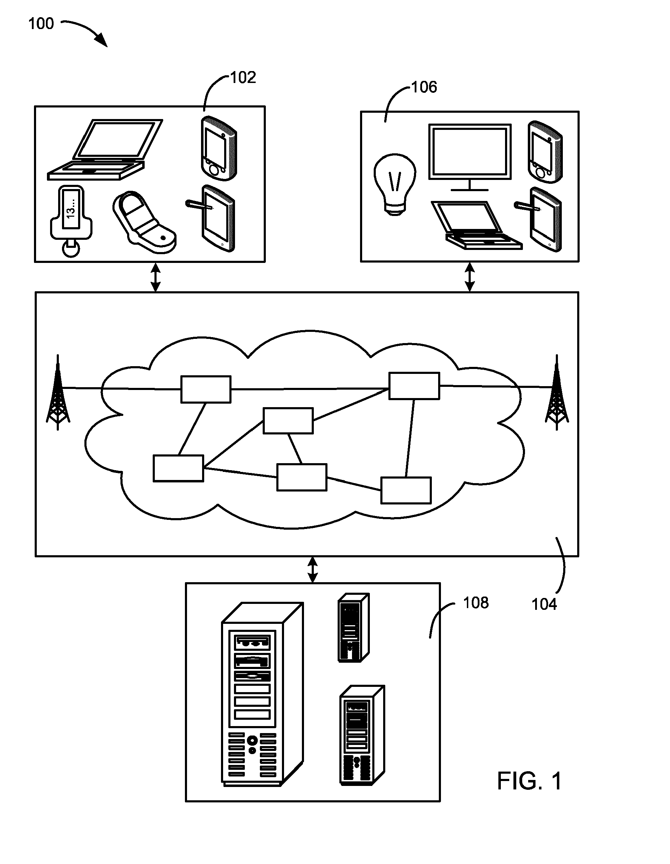

Referring now to FIG. 1, therein is shown a computing system 100 with device interaction mechanism in an embodiment of the present invention. The computing system 100 includes a first device 102, such as a client or a server, connected to a second device 106, such as a client or server.

The computing system 100 can further include a host device 108, such as a client or a server, connected to the first device 102, the second device 106, or a combination thereof. The first device 102, the second device 106, the host device 108, or a combination thereof can communicate using a communication path 104, such as a wireless or wired network.

For example, the first device 102, the second device 106, the host device 108 or a combination thereof can be of any of a variety of devices. The first device 102, the second device 106, the host device 108, or a combination thereof can be a computing device, such as a desktop computer, server, a router, or a laptop computer. The first device 102, the second device 106, the host device 108, or a combination thereof can include a wearable device or a device associated with the user's person, such as devices integrated into glasses, watches, or clothes.

Continuing with the example, the first device 102, the second device 106, the host device 108, or a combination thereof can also be a multi-functional mobile communication device, such as a cellular phone, personal digital assistant, a notebook computer, a tablet computer, or a smart phone. The first device 102, the second device 106, the host device 108, or a combination thereof can further be an entertainment or audio visual device, such as a television, a projector, a display monitor, a broadcasting station transmitter, a game console, a media player, a desktop computer, a tablet computer, or a smart phone.

Continuing with the example, the first device 102, the second device 106, the host device 108, or a combination thereof can couple, either directly or indirectly, to the communication path 104 to communicate with each other. The first device 102, the second device 106, the host device 108, or a combination thereof can also be stand-alone devices. The first device 102, the second device 106, the host device 108, or a combination thereof can further include devices having screens for displaying content, such as a washer, dryer, or a refrigerator having a digital screen for displaying visual or audio-visual content.

As a more specific example, the first device 102 can be a personalized device linked with a user (not shown). The first device 102 can be a device having dedicated features or identifications associated with the user, such as a telephone number, an access or encryption key, or a combination thereof, a device owned by the user, or a combination of devices thereof. The first device 102 can be a device that the user has on his or her person. The first device 102 can include a viewing device, a smart phone, a tablet computer, a laptop computer, an electronic key device, an identification mechanism, or a combination thereof.

For illustrative purposes, the computing system 100 is described with the first device 102 as a portable personal computing device as described above, although it is understood that the first device 102 can be different types of devices. For example, the first device 102 can also be a non-personal or shared device or a stationary device, such as a server or a television.

Also as a more specific example, the second device 106 can be a non-personal or a stationary device. The second device 106 can be a device for providing dedicated features or functionalities simultaneously for one or multiple users or relative to a set location. The second device 106 can include a router, a television, a projector, a desktop computer, a smart home system or a component therein, including a wirelessly controllable light bulb, or a combination thereof.

For illustrative purposes, the computing system 100 is described with the second device 106 as a non-mobile device as described above. However, it is understood that the second device 106 can be different types of devices. For example, the second device 106 can also be a server or a portable computing device, such as a laptop computer, a smart phone, or a tablet computer.

Also as a more specific example, the host device 108 can be any of a variety of centralized or decentralized computing devices, or video transmission devices. For example, the host device 108 can be a broadcasting station, a web server, a content or service provider, a multimedia computer, a laptop computer, a desktop computer, a video game console, grid-computing resources, a virtualized computer resource, cloud computing resource, routers, switches, peer-to-peer distributed computing devices, a smart home system or a component therein, or a combination thereof.

The host device 108 can be centralized in a single room, distributed across different rooms, distributed across different geographical locations, embedded within a telecommunications network. The host device 108 can couple with the communication path 104 to communicate with the first device 102, the second device 106, or a combination thereof. The host device 108 can also be a client type device as described for the first device 102.

For illustrative purposes, the computing system 100 is described with the host device 108 as a computing device, although it is understood that the host device 108 can be different types of devices. Also for illustrative purposes, the computing system 100 is shown with the first device 102, the second device 106, and the host device 108 as end points of the communication path 104, although it is understood that the computing system 100 can have a different partition between the first device 102, the second device 106, the host device 108, and the communication path 104. For example, the first device 102, the second device 106, the host device 108, or a combination thereof can also function as part of the communication path 104.

The communication path 104 can span and represent a variety of networks. For example, the communication path 104 can include wireless communication, wired communication, optical, ultrasonic, or the combination thereof. Satellite communication, cellular communication, Bluetooth, near field communication (NFC), Infrared Data Association standard (IrDA), wireless fidelity (WiFi), and worldwide interoperability for microwave access (WiMAX) are examples of wireless communication that can be included in the communication path 104. Ethernet, digital subscriber line (DSL), fiber to the home (FTTH), and plain old telephone service (POTS) are examples of wired communication that can be included in the communication path 104. Further, the communication path 104 can traverse a number of network topologies and distances. For example, the communication path 104 can include direct connection, personal area network (PAN), local area network (LAN), metropolitan area network (MAN), wide area network (WAN), or a combination thereof.

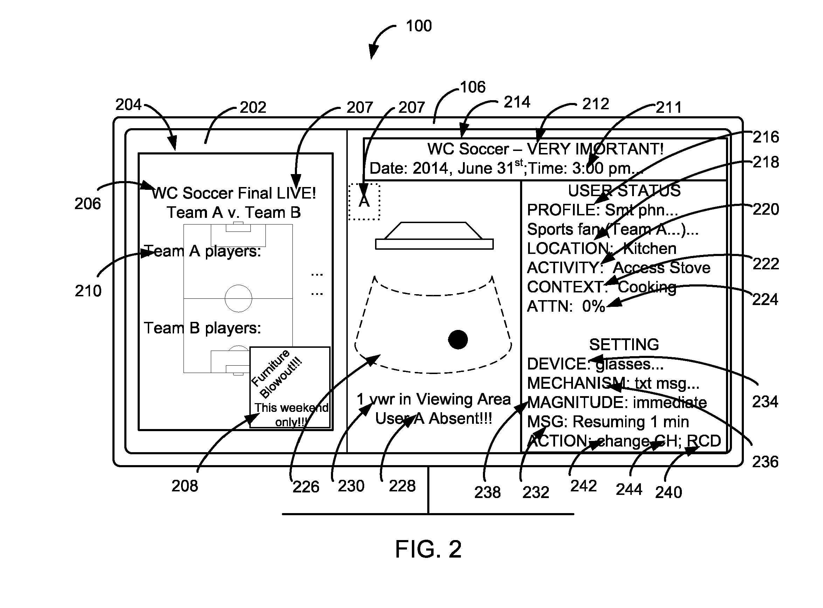

Referring now to FIG. 2, therein is shown an example of a display interface 202 of the second device 106. The display interface 202 can show a content 204. The content 204 is material for communication using the devices in the computing system 100.

For example, the content 204 can include entertainment material, such as television or radio show, images and sounds of from a game, music, pictures, web pages, streaming media, or a combination thereof. Also for example, the content 204 can be communicated, such as by displaying or reproducing sounds, to one or more users through the first device 102 of FIG. 1, the second device 106, the host device 108 of FIG. 1, or a combination thereof.

The content 204 can be a content-of-interest 206. The content-of-interest 206 is the content 204 having importance or concern to the user. For example, the content-of-interest 206 can the user's favorite show or movie, major sporting event, announcements, news, presentation, training material, or a combination thereof. The importance or concern of the content 204 to a user 203 can be determined by the computing system 100, the user, or a combination thereof. Details regarding the determination of the content-of-interest 206 will be discussed below.

The content 204 can be a time-sensitive content 207. The time-sensitive content 207 is the content 204 that is only available to the user 203 within a limited time window. For example, the time-sensitive content 207 can include the content 204 that is broadcasted live as a live feed, having time-limited license or a deadline, or a combination thereof.

For illustrative purposes, the content-of-interest 206 will be described as being the time-sensitive content 207. However, it is understood that the content-of-interest 206 can be different. The content-of-interest 206 can be the content 204 that is not limited in time of availability, such as on-demand or downloaded material, not having time-sensitive license or deadline, or a combination thereof.

The content 204 can include a content break 208, an idle portion 210, or a combination thereof. The content break 208 is a segment of time or material between groupings of relevant portions within the content 204. For example, the content break 208 can be an advertising segment or time spent during user initiated pause.

Also for example, the content break 208 can be the period of time spent for loading content, for displaying set-up or summary content between levels, goals, or sessions in a game. For further example, the content break 208 can be the period time spent downloading or buffering the content.

The idle portion 210 is a segment of time or material within a relevant portion of the content 204 having less importance than the relevant portion of the content 204 or no importance to the user 203. For example, the idle portion 210 can be a summary or highlight portion of a previous linked content, such as a previous episode or earlier games within a season, or a recurring introduction or instruction already seen by the user. Also for example, the idle portion 210 can be explanations or updates, such as pregame lineup or external introduction to the content, having less or no importance relative to the content 204.

The content 204 can have a start time(211). The start time(211) can be based on a broadcast schedule or a user's schedule calendar. The start time(211) can also be based on expiring availability of the content 204, such as expiration time of a product or software license or a deadline. The computing system 100 can calculate the start time(211) based on an estimated or known length of the content 204 and a time of expiration for the availability of the content 204.

The content 204 can have an interest rating 212 associated therewith. The interest rating 212 is a measure of concern or interest associated with the content 204. The interest rating 212 can be used to determine importance or concern associated with the content 204 or a portion therein. The interest rating 212 can be used to determine the idle portion 210, the content-of-interest 206, or a combination thereof. The interest rating 212 can be determined by the computing system 100, the user, or a combination thereof. Details regarding the interest rating 212, the idle portion 210, and the content-of-interest 206 will be discussed below.

The content 204 can be associated with an overall context 214. The overall context 214 is an abstract categorization for a set of facts or circumstances that are associated with the content 204. The overall context 214 can include surrounding information, such as the identity of the viewers or viewing location, rarity or heightened significance of the content 204, such as a championship game or a season finale, a type or title of the content 204, activities surrounding the content 204, a purpose or a use of the content 204 or association with other activities, such as for leisure or work-related function, or a combination thereof.

As a more specific example, the overall context 214 can include a party for viewing the content 204 or watching a show with a date. Also for example, the overall context 214 can include a national event or an emergency announcement, a work-related training material, an overall research or project including the content 204, or a combination thereof.

The computing system 100 can determine the overall context 214 based on a variety of factors. For example, the computing system 100 can use time or location information, information regarding a user, calendar information, metadata or title associated with the content 204, previous use or settings, other relevant information available to the computing system 100, such as on the Internet or a database, or a combination thereof. Details regarding the determination and use of the overall context 214 will be discussed below.

The computing system 100 can use information associated with the content 204, the overall context 214, or a combination thereof to notify the user, adjust a device setting, or perform a combination of processes thereof. The computing system 100 can further use information regarding the user 203 in notifying the user, adjusting a device setting, or performing a combination of processes thereof. For example, computing system 100 can use a user-profile 216, a user-location 218, a user-activity 220, a user-context 222, a user-attention measure 224, or a combination thereof.

The user-profile 216 is personal information for the user 203. The user-profile 216 can include identification information, demographic information, licenses or access privileges, previous usage or access information, such as for instances of the content 204 or devices, or a combination thereof. The user-profile 216 can further include information previously received or generated by the user 203, including a website, a document, a posting, an image, an audio track, an email, a bookmark, an affinity designation or a rating, or a combination thereof.

The user-location 218 is a physical geographic position of the user 203. The user-location 218 can be represented by a set of coordinates, such as that of a global positioning system (GPS) or a longitude-latitude set. The user-location 218 can also be represented by an address, a landmark name, such as a set of street names for intersecting streets or an abstract name for an area including the geographic position, a contextual-importance given to a location, such as "work" or "kitchen", or a combination thereof.

The user-activity 220 is a categorization of a user's action, movement, posture, or a combination thereof. For example, the user-activity 220 can include work, rest, chores, travel, preparation for another activity, leisure, or a combination thereof. As a more specific example, user-activity 220 can include writing a report, sleeping, washing, eating, cooking, socializing, going home, exercising, watching television, or a combination thereof.

The user-context 222 is an abstract categorization for a set of facts or circumstances that are associated with the user 203 or the user-activity 220. For example, the overall context 214 can include surrounding information, such as other people near the user, user's relationship to nearby people or the user-location, a relationship to other activities, an importance or value associated with the user-activity 220, a purpose or goal, or a combination thereof regarding the user-activity 220, or a combination thereof.

As a more specific example, the user-context 222 can include attending a party for viewing the content 204 with a group of people or being on a date. Also for example, the user-context 222 can include working, personal activity, an overall research or project including the user-activity 220, or a combination thereof. The user-context 222 can be congruent with or same as the overall context 214, or can be different from the overall context 214.

The user-attention measure 224 is an indication of a user's focus or effort directly related to the user-activity 220. The user-attention measure 224 can be a score, such as a value corresponding to a scale or a percentage representation, an abstract rating, such as 'high' or 'distracted', or a combination thereof. The user-attention measure 224 can be based on a user's posture, facial expression, orientation, speed of movement, or a combination thereof. The user-attention measure 224 can also be based on an amount of time the user 203 has spent on the user-activity 220, either as a continuous duration including a current time or a duration occurring on a previous occasion.

The display interface 202 can further show information regarding the user 203 relative to a viewing area 226. The viewing area 226 is a set of geographic locations where a viewer can view the content 204 when displayed on a corresponding device. For example, the viewing area 226 can be locations of a room having direct line-of-sight to a television or projector screen. Also for example, the viewing area 226 can be locations viewable by a camera included in the first device 102, the second device 106, the host device 108, or a combination thereof.

The computing system 100 can determine a user-absence 228 or a user-presence 230 relative to the viewing area 226. The user-presence 230 and the user-absence 228 are a status information regarding the user-location 218 compared to the viewing area 226.

The display interface 202 can further show an active-content notification 232. The active-content notification 232 is an alert for notifying the user 203 regarding a start or resumption of the content-of-interest 206 or a portion therein.

The active-content notification 232 can include adjusting a setting, such as changing an output intensity or generating physical movement for a device, displaying information or message, generating sounds, or a combination thereof. For example, the active-content notification 232 can include dimming or flashing lights or displays, vibrating a device, displaying a popup alert, playing a reminder message or a beep, or a combination thereof.

The active-content notification 232 can include an alert device identification 234, an alert mechanism 236, an alert magnitude 238, or a combination thereof. The alert device identification 234 is information representing a specific device. For example, the alert device identification 234 can include a serial number, a model information, a user-assigned name, an identification or network key, a uniform resource locator (URL), a phone number, or a combination thereof. The computing system 100 can use the alert device identification 234 to access the specific device for generating the active-content notification 232 therewith.

The alert mechanism 236 is a method of accessing the specific device corresponding to the alert device identification 234 for generating the active-content notification 232. For example, the alert mechanism 236 can include a communication format, such as a frequency or a protocol, a command for directly controlling a function of the device or displaying a message, a protocol for making a phone call to play a recorded message or accessing a messaging application for sending a text-based message, or a combination thereof.

The alert magnitude 238 is a degree of urgency or an amount of remaining time to be conveyed by the active-content notification 232. For example, the alert magnitude 238 can include output amplitude for a speaker, a frequency for blinking a display or output, a color setting, a ring-tone setting, specific message content, a number or representation of a level, or a combination thereof.

Similar to notifying the user, the computing system 100 can further control a device for displaying the content 204. For example, the computing system 100 can use a content-delay setting 240 or a content-view setting 242.

The content-delay setting 240 is a set of processes or commands for viewing the content 204 from the beginning and catching up a current progress of the content 204. The content-delay setting 240 can include recording the content 204 at the start time(211), eliminating or skipping a portion, such as the content break 208 or the idle portion 210, or a combination thereof until the user 203 can access the content 204 as it becomes available.

The content-view setting 242 is a set of processes or commands for initiating, changing, adjusting, or a combination of processes thereof for a device setting 244 to view the content 204 at the start time(211). The device setting 244 can include channel information, viewing application, access information, such as a password or a user name, routing information corresponding to the alert device identification 234, or a combination thereof. The content-view setting 242 can include a time for initiating the instructions or commands, such that processing for the device setting 244 will be complete before or by the start time(211).

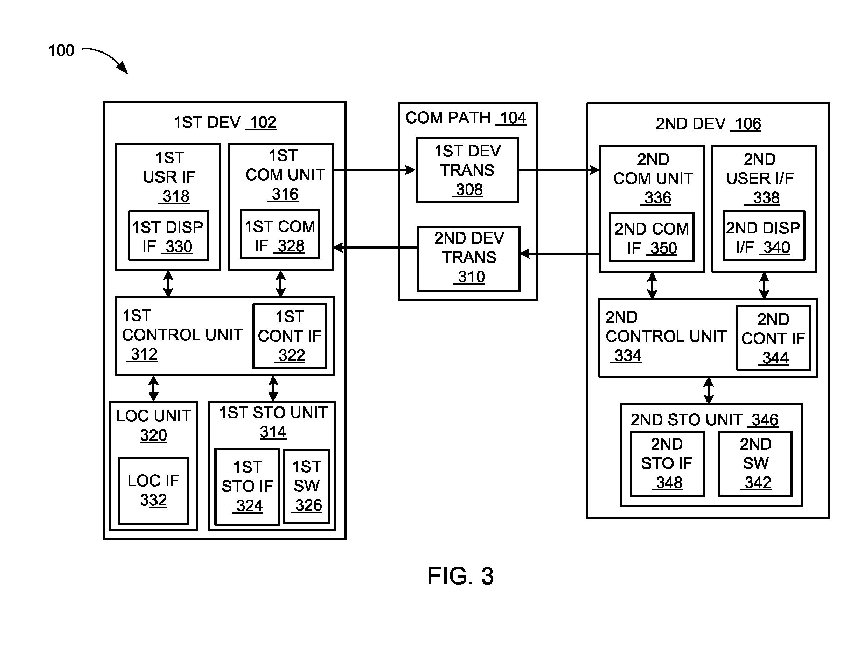

Referring now to FIG. 3, therein is shown an exemplary block diagram of the computing system 100. The computing system 100 can include the first device 102, the communication path 104, and the second device 106. The first device 102 can send information in a first device transmission 308 over the communication path 104 to the second device 106. The second device 106 can send information in a second device transmission 310 over the communication path 104 to the first device 102.

For illustrative purposes, the computing system 100 is shown with the first device 102 and the second device 106 as client devices, although it is understood that the computing system 100 can have the first device 102 and the second device 106 as different type of devices. For example, the first device 102, the second device 106, or a combination thereof can be a server having a display interface.

For brevity of description in this embodiment of the present invention, the first device 102 and the second device 106 will be described as client devices. The embodiment of the present invention is not limited to this selection for the type of devices. The selection is an example of an embodiment of the present invention.

The first device 102 can include a first control unit 312, a first storage unit 314, a first communication unit 316, and a first user interface 318, and a location unit 320. The first control unit 312 can include a first control interface 322. The first control unit 312 can execute a first software 326 to provide the intelligence of the computing system 100.

The first control unit 312 can be implemented in a number of different manners. For example, the first control unit 312 can be a processor, an application specific integrated circuit (ASIC), an embedded processor, a microprocessor, a hardware control logic, a hardware finite state machine (FSM), a digital signal processor (DSP), or a combination thereof. The first control interface 322 can be used for communication between the first control unit 312 and other functional units in the first device 102. The first control interface 322 can also be used for communication that is external to the first device 102.

The first control interface 322 can receive information from the other functional units or from external sources, or can transmit information to the other functional units or to external destinations. The external sources and the external destinations refer to sources and destinations external to the first device 102.

The first control interface 322 can be implemented in different ways and can include different implementations depending on which functional units or external units are being interfaced with the first control interface 322. For example, the first control interface 322 can be implemented with a pressure sensor, an inertial sensor, a microelectromechanical system (MEMS), optical circuitry, waveguides, wireless circuitry, wireline circuitry, or a combination thereof.

The first storage unit 314 can store the first software 326. The first storage unit 314 can also store the relevant information, such as data representing incoming images, data representing previously presented image, sound files, or a combination thereof.

The first storage unit 314 can be a volatile memory, a nonvolatile memory, an internal memory, an external memory, or a combination thereof. For example, the first storage unit 314 can be a nonvolatile storage such as non-volatile random access memory (NVRAM), Flash memory, disk storage, or a volatile storage such as static random access memory (SRAM).

The first storage unit 314 can include a first storage interface 324. The first storage interface 324 can be used for communication between the location unit 320 and other functional units in the first device 102. The first storage interface 324 can also be used for communication that is external to the first device 102.

The first storage interface 324 can receive information from the other functional units or from external sources, or can transmit information to the other functional units or to external destinations. The external sources and the external destinations refer to sources and destinations external to the first device 102.

The first storage interface 324 can include different implementations depending on which functional units or external units are being interfaced with the first storage unit 314. The first storage interface 324 can be implemented with technologies and techniques similar to the implementation of the first control interface 322.

The first communication unit 316 can enable external communication to and from the first device 102. For example, the first communication unit 316 can permit the first device 102 to communicate with the second device 106 of FIG. 1, the host device 108 of FIG. 1, an attachment, such as a peripheral device or a computer desktop, and the communication path 104.

The first communication unit 316 can also function as a communication hub allowing the first device 102 to function as part of the communication path 104 and not limited to be an end point or terminal unit to the communication path 104. The first communication unit 316 can include active and passive components, such as microelectronics or an antenna, for interaction with the communication path 104.

The first communication unit 316 can include a first communication interface 328. The first communication interface 328 can be used for communication between the first communication unit 316 and other functional units in the first device 102. The first communication interface 328 can receive information from the other functional units or can transmit information to the other functional units.

The first communication interface 328 can include different implementations depending on which functional units are being interfaced with the first communication unit 316. The first communication interface 328 can be implemented with technologies and techniques similar to the implementation of the first control interface 322.

The first user interface 318 allows a user (not shown) to interface and interact with the first device 102. The first user interface 318 can include an input device and an output device. Examples of the input device of the first user interface 318 can include a keypad, a touchpad, soft-keys, a keyboard, a microphone, an infrared sensor for receiving remote signals, or any combination thereof to provide data and communication inputs.

The first user interface 318 can include a graphics processing unit (GPU) and a first display interface 330. The first display interface 330 can include a display, a projector, a video screen, a speaker, or any combination thereof. The first display interface 330 can include the display interface 202 of FIG. 2.

The first control unit 312 can operate the first user interface 318 to display information generated by the computing system 100. The first control unit 312 can also execute the first software 326 for the other functions of the computing system 100, including receiving location information from the location unit 320. The first control unit 312 can further execute the first software 326 for interaction with the communication path 104 via the first communication unit 316.

The location unit 320 can generate location information, current heading, current acceleration, and current speed of the first device 102, as examples. The location unit 320 can be implemented in many ways. For example, the location unit 320 can function as at least a part of GPS, an inertial navigation system, a cellular-tower location system, a pressure location system, or any combination thereof. Also, for example, the location unit 620 can utilize components such as an accelerometer, a gyroscope, GPS receiver, or a combination thereof.

The location unit 320 can include a location interface 332. The location interface 332 can be used for communication between the location unit 320 and other functional units in the first device 102. The location interface 632 can also be used for communication external to the first device 102.

The location interface 332 can receive information from the other functional units or from external sources, or can transmit information to the other functional units or to external destinations. The external sources and the external destinations refer to sources and destinations external to the first device 102.

The location interface 332 can include different implementations depending on which functional units or external units are being interfaced with the location unit 320. The location interface 332 can be implemented with technologies and techniques similar to the implementation of the first control unit 312.

The second device 106 can be optimized for implementing an embodiment of the present invention in a multiple device embodiment with the first device 102. The second device 106 can provide the additional or higher performance processing power compared to the first device 102. The second device 106 can also provide optimized display interface compared to the first device 102, such as a bigger screen or a higher definition. The second device 106 can include a second control unit 334, a second communication unit 336, and a second user interface 338.

The second user interface 338 allows a user (not shown) to interface and interact with the second device 106. The second user interface 338 can include an input device and an output device. Examples of the input device of the second user interface 338 can include a keypad, a touchpad, touch screen, soft-keys, a keyboard, a microphone, or any combination thereof to provide data and communication inputs. Examples of the output device of the second user interface 338 can include a second graphics processing unit and a second display interface 340. The second display interface 340 can include a display, a projector, a video screen, a speaker, or any combination thereof. The second display interface 340 can also include the further display 204 of FIG. 2.

The second control unit 334 can execute a second software 342 to provide the intelligence of the second device 106 of the computing system 100. The second software 342 can operate in conjunction with the first software 326. The second control unit 334 can provide additional performance compared to the first control unit 312.

The second control unit 334 can operate the second user interface 338 to display information. The second control unit 334 can also execute the second software 342 for the other functions of the computing system 100, including operating the second communication unit 336 to communicate with the first device 102, the host device 108, or a combination thereof over the communication path 104.

The second control unit 334 can be implemented in a number of different manners. For example, the second control unit 334 can be a processor, an application specific integrated circuit (ASIC), an embedded processor, a microprocessor, hardware control logic, a hardware finite state machine (FSM), a digital signal processor (DSP), or a combination thereof.

The second control unit 334 can include a second controller interface 344. The second controller interface 344 can be used for communication between the second control unit 334 and other functional units in the second device 106. The second controller interface 344 can also be used for communication that is external to the second device 106.

The second controller interface 344 can receive information from the other functional units or from external sources, or can transmit information to the other functional units or to external destinations. The external sources and the external destinations refer to sources and destinations external to the second device 106.

The second controller interface 344 can be implemented in different ways and can include different implementations depending on which functional units or external units are being interfaced with the second controller interface 344. For example, the second controller interface 344 can be implemented with a pressure sensor, an inertial sensor, a microelectromechanical system (MEMS), optical circuitry, waveguides, wireless circuitry, wireline circuitry, or a combination thereof.

A second storage unit 346 can store the second software 342. The second storage unit 346 can also store the such as data representing incoming images, data representing previously presented image, sound files, or a combination thereof. The second storage unit 346 can be sized to provide the additional storage capacity to supplement the first storage unit 314.

For illustrative purposes, the second storage unit 346 is shown as a single element, although it is understood that the second storage unit 346 can be a distribution of storage elements. Also for illustrative purposes, the computing system 100 is shown with the second storage unit 346 as a single hierarchy storage system, although it is understood that the computing system 100 can have the second storage unit 346 in a different configuration. For example, the second storage unit 346 can be formed with different storage technologies forming a memory hierarchal system including different levels of caching, main memory, rotating media, or off-line storage.

The second storage unit 346 can be a volatile memory, a nonvolatile memory, an internal memory, an external memory, or a combination thereof. For example, the second storage unit 346 can be a nonvolatile storage such as non-volatile random access memory (NVRAM), Flash memory, disk storage, or a volatile storage such as static random access memory (SRAM).

The second storage unit 346 can include a second storage interface 348. The second storage interface 348 can be used for communication between other functional units in the second device 106. The second storage interface 348 can also be used for communication that is external to the second device 106.

The second storage interface 348 can receive information from the other functional units or from external sources, or can transmit information to the other functional units or to external destinations. The external sources and the external destinations refer to sources and destinations external to the second device 106.

The second storage interface 348 can include different implementations depending on which functional units or external units are being interfaced with the second storage unit 346. The second storage interface 348 can be implemented with technologies and techniques similar to the implementation of the second controller interface 344.

The second communication unit 336 can enable external communication to and from the second device 106. For example, the second communication unit 336 can permit the second device 106 to communicate with the first device 102 over the communication path 104.

The second communication unit 336 can also function as a communication hub allowing the second device 106 to function as part of the communication path 104 and not limited to be an end point or terminal unit to the communication path 104. The second communication unit 336 can include active and passive components, such as microelectronics or an antenna, for interaction with the communication path 104.

The second communication unit 336 can include a second communication interface 350. The second communication interface 350 can be used for communication between the second communication unit 336 and other functional units in the second device 106. The second communication interface 350 can receive information from the other functional units or can transmit information to the other functional units.

The second communication interface 350 can include different implementations depending on which functional units are being interfaced with the second communication unit 336. The second communication interface 350 can be implemented with technologies and techniques similar to the implementation of the second controller interface 344.

The first communication unit 316 can couple with the communication path 104 to send information to the second device 106 in the first device transmission 308. The second device 106 can receive information in the second communication unit 336 from the first device transmission 308 of the communication path 104.

The second communication unit 336 can couple with the communication path 104 to send information to the first device 102 in the second device transmission 310. The first device 102 can receive information in the first communication unit 316 from the second device transmission 310 of the communication path 104. The computing system 100 can be executed by the first control unit 312, the second control unit 334, or a combination thereof.

The first device 102, the second device 106, or a combination thereof can similarly communicate and interact with the host device 108. Details for the host device 108 will be described below.

For illustrative purposes, the second device 106 is shown with the partition having the second user interface 338, the second storage unit 346, the second control unit 334, and the second communication unit 336, although it is understood that the second device 106 can have a different partition. For example, the second software 342 can be partitioned differently such that some or all of its function can be in the second control unit 334 and the second communication unit 336. Also, the second device 106 can include other functional units not shown in FIG. 3 for clarity.

The functional units in the first device 102 can work individually and independently of the other functional units. The first device 102 can work individually and independently from the second device 106, the host device 108, and the communication path 104.

The functional units in the second device 106 can work individually and independently of the other functional units. The second device 106 can work individually and independently from the first device 102, the host device 108, and the communication path 104.

For illustrative purposes, the computing system 100 is described by operation of the first device 102 and the second device 106. It is understood that the first device 102, the second device 106, and the host device 108 can operate any of the modules and functions of the computing system 100.

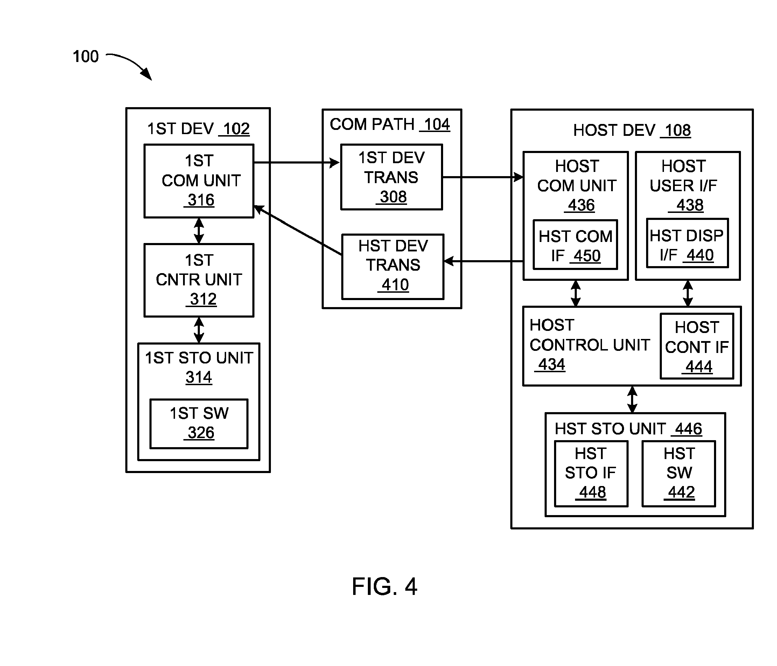

Referring now to FIG. 4, therein is shown a further exemplary block diagram of the computing system 100. Along with the first device 102, and the second device 106 of FIG. 3, the computing system 100 can include the host device 108. The first device 102 can send information in the first device transmission over the communication path 104 to the host device 108. The host device 108 can send information in a host device transmission 410 over the communication path 104 to the first device 102.

For illustrative purposes, the computing system 100 is shown with the host device 108 as a server, although it is understood that the computing system 100 can have the host device 108 as a different type of device. For example, the host device 108 can be a client device.

Also for illustrative purposes, the computing system 100 is shown with the first device 102 communicating with the host device 108. However, it is understood that the second device 106, or a combination thereof can also communicate with the host device 108 in a similar manner as the communication between the first device 102 and the second device 106.

For brevity of description in this embodiment of the present invention, the host device 108 will be described as a server device. The embodiment of the present invention is not limited to this selection for the type of devices. The selection is an example of an embodiment of the present invention.

The host device 108 can be optimized for implementing an embodiment of the present invention in a multiple device embodiment with the first device 102. The host device 108 can provide the additional or higher performance processing power compared to the first device 102, the second device 106, or a combination thereof. The host device 108 can include a host control unit 434, a host communication unit 436, and a host user interface 438.

The host user interface 438 allows a user (not shown) to interface and interact with the host device 108. The host user interface 438 can include an input device and an output device. Examples of the input device of the host user interface 438 can include a keypad, a touchpad, touch screen, soft-keys, a keyboard, a microphone, or any combination thereof to provide data and communication inputs. Examples of the output device of the host user interface 438 can include a host display interface 440. The host display interface 440 can include a display, a projector, a video screen, a speaker, or any combination thereof.

The host control unit 434 can execute a host software 442 to provide the intelligence of the host device 108 of the computing system 100. The host software 442 can operate in conjunction with the first software 326, the second software 342 of FIG. 3, or a combination thereof. The host control unit 434 can provide additional performance compared to the first control unit 312.

The host control unit 434 can operate the host user interface 438 to display information. The host control unit 434 can also execute the host software 442 for the other functions of the computing system 100, including operating the host communication unit 436 to communicate with the first device 102, the second device 106, or a combination thereof over the communication path 104.

The host control unit 434 can be implemented in a number of different manners. For example, the host control unit 434 can be a processor, an application specific integrated circuit (ASIC), an embedded processor, a microprocessor, hardware control logic, a hardware finite state machine (FSM), a digital signal processor (DSP), or a combination thereof.

The host control unit 434 can include a host controller interface 444. The host controller interface 444 can be used for communication between the host control unit 434 and other functional units in the host device 108. The host controller interface 444 can also be used for communication that is external to the host device 108.

The host controller interface 444 can receive information from the other functional units or from external sources, or can transmit information to the other functional units or to external destinations. The external sources and the external destinations refer to sources and destinations external to the host device 108.

The host controller interface 444 can be implemented in different ways and can include different implementations depending on which functional units or external units are being interfaced with the host controller interface 444. For example, the host controller interface 444 can be implemented with a pressure sensor, an inertial sensor, a microelectromechanical system (MEMS), optical circuitry, waveguides, wireless circuitry, wireline circuitry, or a combination thereof.

A host storage unit 446 can store the host software 442. The host storage unit 446 can also store the such as data representing incoming images, data representing previously presented image, sound files, or a combination thereof. The host storage unit 446 can be sized to provide the additional storage capacity to supplement the first storage unit 314.

For illustrative purposes, the host storage unit 446 is shown as a single element, although it is understood that the host storage unit 446 can be a distribution of storage elements. Also for illustrative purposes, the computing system 100 is shown with the host storage unit 446 as a single hierarchy storage system, although it is understood that the computing system 100 can have the host storage unit 446 in a different configuration. For example, the host storage unit 446 can be formed with different storage technologies forming a memory hierarchal system including different levels of caching, main memory, rotating media, or off-line storage.

The host storage unit 446 can be a volatile memory, a nonvolatile memory, an internal memory, an external memory, or a combination thereof. For example, the host storage unit 446 can be a nonvolatile storage such as non-volatile random access memory (NVRAM), Flash memory, disk storage, or a volatile storage such as static random access memory (SRAM).

The host storage unit 446 can include a host storage interface 448. The host storage interface 448 can be used for communication between other functional units in the host device 108. The host storage interface 448 can also be used for communication that is external to the host device 108.

The host storage interface 448 can receive information from the other functional units or from external sources, or can transmit information to the other functional units or to external destinations. The external sources and the external destinations refer to sources and destinations external to the host device 108.

The host storage interface 448 can include different implementations depending on which functional units or external units are being interfaced with the host storage unit 446. The host storage interface 448 can be implemented with technologies and techniques similar to the implementation of the host controller interface 444.

The host communication unit 436 can enable external communication to and from the host device 108. For example, the host communication unit 436 can permit the host device 108 to communicate with the first device 102, the second device 106, or a combination thereof over the communication path 104.

The host communication unit 436 can also function as a communication hub allowing the host device 108 to function as part of the communication path 104 and not limited to be an end point or terminal unit to the communication path 104. The host communication unit 436 can include active and passive components, such as microelectronics or an antenna, for interaction with the communication path 104.

The host communication unit 436 can include a host communication interface 450. The host communication interface 450 can be used for communication between the host communication unit 436 and other functional units in the host device 108. The host communication interface 450 can receive information from the other functional units or can transmit information to the other functional units.

The host communication interface 450 can include different implementations depending on which functional units are being interfaced with the host communication unit 436. The host communication interface 450 can be implemented with technologies and techniques similar to the implementation of the host controller interface 444.

The first communication unit 316 can couple with the communication path 104 to send information to the host device 108 in the first device transmission 308. The host device 108 can receive information in the host communication unit 436 from the first device transmission 308 of the communication path 104.

The host communication unit 436 can couple with the communication path 104 to send information to the first device 102 in the host device transmission 410. The first device 102 can receive information in the first communication unit 316 from the host device transmission 410 of the communication path 104. The computing system 100 can be executed by the first control unit 312, the host control unit 434, or a combination thereof. The second device 106 can similarly communicate and interact with the host device 108 using the corresponding units and functions therein.

For illustrative purposes, the host device 108 is shown with the partition having the host user interface 438, the host storage unit 446, the host control unit 434, and the host communication unit 436, although it is understood that the host device 108 can have a different partition. For example, the host software 442 can be partitioned differently such that some or all of its function can be in the host control unit 434 and the host communication unit 436. Also, the host device 108 can include other functional units not shown in FIG. 4 for clarity.

The functional units in the host device 108 can work individually and independently of the other functional units. The host device 108 can work individually and independently from the first device 102, the second device 106, and the communication path 104.

For illustrative purposes, the computing system 100 is described by operation of the first device 102 and the host device 108. It is understood that the first device 102, the second device 106, and the host device 108 can operate any of the modules and functions of the computing system 100.

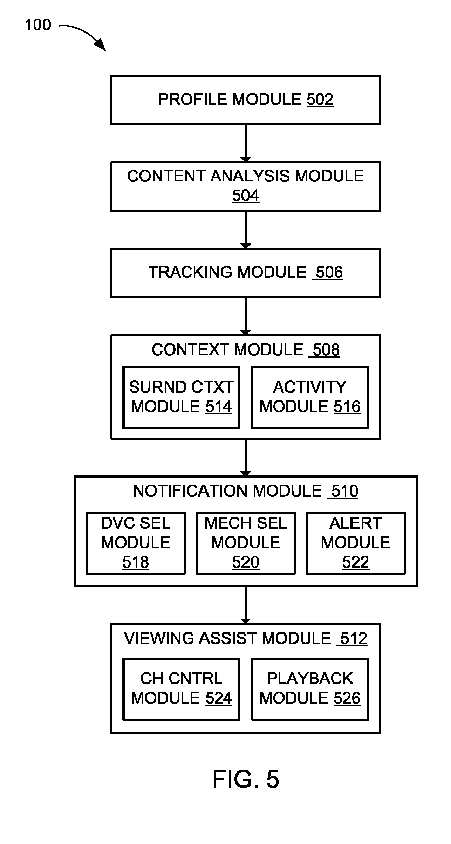

Referring now to FIG. 5, therein is shown a control flow of the computing system 100. The computing system 100 can include a profile module 502, a content analysis module 504, a tracking module 506, a context module 508, a notification module 510, and a viewing assistance module 512.

The profile module 502 can be coupled to the content analysis module 504 using wired or wireless connections, by having an output of one module as an input of the other module, by having operations of one module influence operation of the other module, or a combination thereof. Similarly, the content analysis module 504 can be coupled to the tracking module 506, and the tracking module 506 can be coupled to the context module 508. Also, context module 508 can be coupled to the notification module, and the notification module 510 can be coupled to the viewing assistance module 512.

The profile module 502 is configured to determine personal information regarding the user 203 of FIG. 2. The profile module 502 can be configured to determine the user-profile 216 of FIG. 2. The profile module 502 can determine the user-profile 216 by determining identification or demographic information of the user 203, licenses or access privileges, a usage history, or a combination thereof associated with the user 203.

The profile module 502 can use the first user interface 318 of FIG. 3, the second user interface 338 of FIG. 3, the host user interface 438 of FIG. 4, or a combination thereof to interact with the user 203 and determine identification or demographic information based on inputs from the user 203. For example, the profile module 502 can interact with the user using a display screen, an input device, a speaker, or a combination thereof to receive information regarding user's name, physical appearance, auditory signatures, information regarding devices belonging to the user, other personal information, or a combination thereof.

The profile module 502 can use the first communication unit 316 of FIG. 3, the second communication unit 336 of FIG. 3, the host communication unit 436 of FIG. 4, or a combination thereof to further access user information. For example, the profile module 502 can search the Internet or various databases for registration information, other profiles, such as a social networking profile or a professional bio, or a combination thereof associated with the user 203.

The profile module 502 can further determine the usage history associated with the user. The profile module 502 can use the first communication unit 316, the second communication unit 336, the host communication unit 436, or a combination thereof to track the content 204 of FIG. 2 accessed by the user.

For example, the profile module 502 can track information previously received or sent by the user 203, including a website, a document, a posting, an image, an audio track, an email, a bookmark, an affinity designation or a rating, or a combination thereof. Also for example, the profile module 502 can track the shows, movies, or music accessed by the user 203, identification information for devices used by the user 203 and the associated purpose or task, or a combination thereof.

The profile module 502 can also use the first control unit 312 of FIG. 3, the second control unit 334 of FIG. 3, the host control unit 434 of FIG. 4, or a combination thereof to track documents and files generated by the user 203 or documents and files stored in the first storage unit 314 of FIG. 3, the second storage unit 346 of FIG. 3, the host storage unit 446 of FIG. 4, or a combination thereof having association to user's name or account information. For example, the profile module 502 can search for text file, audio files, emails, images, or a combination thereof associated with the user.

The profile module 502 can similarly track the licensing or access privilege information associated with files or applications. The profile module 502 can further track settings and processes associated with files or applications and preferred or predetermined by the user 203.

The profile module 502 can determine the user-profile 216 by determining, organizing, and grouping the identification or demographic information, the usage history, the licensing or access privilege information, or a combination thereof associated with the user 203, the documents and files generated by the user 203, the settings and processes associated therewith, or a combination thereof. The profile module 502 can store the user-profile 216 in the first storage unit 314, the second storage unit 346, the host storage unit 446, or a combination thereof.

After determining the user-profile 216, the control flow can pass from the profile module 502 to the content analysis module 504. The control flow can pass by having the user-profile 216 or a portion therein as an output from the profile module 502 to an input for the content analysis module 504, storing the user-profile 216 at a location known and accessible to the content analysis module 504, by notifying the content analysis module 504 by using a flag, an interrupt, a status signal, or a combination thereof, or a combination of processes thereof.

The content analysis module 504 is configured to identify details regarding the content 204. The content analysis module 504 can be configured to detect the content-of-interest 206 of FIG. 2 or identify portions or segments within the content 204, such as determining the idle portion 210 of FIG. 2 or the content break 208.

The content analysis module 504 can detect the content-of-interest 206 by comparing metadata, description, title, cast, categorization, or a combination thereof to the user-profile 216. For example, the content analysis module 504 can search programming schedule, the Internet, a database, or a combination thereof for information related to the content 204 or a portion therein, for the content 204 scheduled around current time or after the current time. Also for example, the content analysis module 504 can similarly search for the content 204 indicated by the user's schedule calendar, as indicated by the user-profile 216.

The content analysis module 504 can determine categories or items of interest to the user 203. For example, the content analysis module 504 can search the user-profile 216, such as the usage history or the user generated material, and determine commonly occurring words, subjects, or themes.

Also for example, the content analysis module 504 can determine similarities or patterns associated with ratings or affinity designations given by the user 203. As a more specific example, the content analysis module 504 can determine rating or affinity using words or distinctions such as "liked" or "fantastic" in user postings or frequency of visits to a category or a specific instance of a website or an image.

The content analysis module 504 can further compare the information regarding the content 204 to the categories or items determined to be of interest to the user 203. The content analysis module 504 can determine the content 204 to be the content-of-interest 206 when the information regarding the content 204 overlaps the categories or items determined to be of interest to the user 203.

The content analysis module 504 can represent the amount of overlap or match between the two results as the interest rating 212. The interest rating 212 can reflect the estimated amount of interest the user 203 would have for the content 204 based on analyzing the content 204 and the user-profile 216.

The content analysis module 504 can determine the content 204 to be the content-of-interest 206 when the interest rating 212 exceeds a threshold. The content analysis module 504 can include methods, thresholds, or a combination thereof predetermined by the computing system 100 to determine the categories or items of interest, determine the interest rating 212 for the content 204, detect the content-of-interest 206,or a combination thereof.

The content analysis module 504 can also identify portions or segments within the content 204. The content analysis module 504 can analyze the content 204 when the content 204 is being communicated to the user, such as by displaying the content 204, recreating the audio according to the content 204, or a combination thereof.

For example, the content analysis module 504 can match images or sounds, determine settings or characters, analyze metadata or settings, or a combination thereof to analyze the content 204. The content analysis module 504 can further access the internet or a database for analyzing the content 204.

Continuing with the example, the content analysis module 504 can identify advertising material or portions not related to previously occurring patterns within the content 204, such as presence of unknown characters or unrelated setting, or identify advertising material or portions using the metadata associated with each portion. The content analysis module 504 can determine the portion as the content break 208 based on pattern analysis or the metadata. The content analysis module 504 can similarly determine the idle portion 210.

As a more specific example, the content analysis module 504 can include a method predetermined by the computing system 100 for recognizing spoken or displayed words for "previously on" as a cue for the idle portion 210 when the user 203 has seen previously occurring or related instances of the content 204. Also as an example, the content analysis module 504 can include a pattern, a threshold, or a combination thereof predetermined by the computing system 100 for recognizing computer-generated images, images not having a field or grass, static images, or a combination thereof during an athletic event as the idle portion 210.

The content break 208, the idle portion 210, or a combination thereof can be processed by the computing system 100 in notifying the user 203 or displaying the content 204 according to the content-delay setting 240 of FIG. 2. Details regarding the use of the content break 208 and the idle portion 210 will be described below.

The content analysis module 504 can determine the content 204 as being the time-sensitive content 207 of FIG. 2. The content analysis module 504 can use the metadata, the scheduling information, source of the content 204, categorization for the content 204, or a combination thereof to determine the content 204 as being the time-sensitive content 207.

For illustrative purposes, the content 204 will be described as being the content-of-interest 206 and the time-sensitive content 207. However, it is understood that the computing system 100 can process other instances of the content 204, such as on-demand type of content or ones that are determined to be of less importance to the user 203.

The content analysis module 504 can use the first control unit 312, the second control unit 334, the host control unit 434, or a combination thereof to detect the content-of-interest 206 or the time-sensitive content 207, determine the idle portion 210 or the content break 208, or a combination thereof. The content analysis module 504 can reflect the results in a current status indication in the first storage unit 314, the second storage unit 346, the host storage unit 446, or a combination thereof.

After identifying details regarding the content 204, the control flow can pass to the tracking module 506. The control flow can pass similarly as described above between the profile module 502 and the content analysis module 504, but using the details or status regarding the content 204 or a portion therein.

The tracking module 506 is configured to identify the user-location 218 of FIG. 2 relative to the content-of-interest 206. The tracking module 506 can use the location unit 320 of FIG. 3 to identify the user-location 218. The tracking module 506 can identify the user-location 218 when the content 204 is detected to be content-of-interest 206, identified as the time-sensitive content 207, or a combination thereof.

The tracking module 506 can further use user's schedule calendar, user's sign-in or device access information, or a combination thereof to determine the user-location 218. For example, the tracking module 506 can determine a location from a currently-occurring item in the calendar or a location of a device currently signed-in or used by the user 203 as the user-location 218.

The tracking module 506 can further determine the viewing area 226 of FIG. 2 using the first user interface 318, the second user interface 338, the host user interface 438, or a combination thereof. The tracking module 506 can use a camera on the first device 102 of FIG. 1, the second device 106 of FIG. 1, the host device 108 of FIG. 1, or a combination thereof to determine the viewing area 226. For example, the viewing area 226 can include the area identified by the camera on the projector or the television, or the area relative to the smart phone identified using graphic interfaces.

The tracking module 506 can use the user-location 218, the viewing area 226, or a combination thereof to determine whether the user 203 is in the viewing area 226. The tracking module 506 can determine the user-presence 230 of FIG. 2 when the user-location 218 overlaps or is within the viewing area 226. The tracking module 506 can determine the user-absence 228 of FIG. 2 when the user-location 218 does not overlap and is not within the viewing area 226.

The tracking module 506 can store the viewing area 226, the user-location 218, or a combination thereof in the first storage unit 314, the second storage unit 346, the host storage unit 446, or a combination thereof. The tracking module 506 can further reflect the user-presence 230 or the user-absence 228 relative to the viewing area 226 in the first storage unit 314, the second storage unit 346, the host storage unit 446, or a combination thereof.

After identifying location information for the user 203, the control flow can pass to the context module 508. The control flow can pass similarly as described above between the profile module 502 and the content analysis module 504, but using the user-location 218, the viewing area 226, related status thereof, or a combination thereof.

The context module 508 is configured to determine contextual information surrounding the content 204, the user 203, or a combination thereof. The context module 508 can include a surrounding-context module 514 and the activity module 516 for determining contextual information.

The surrounding-context module 514 is configured to determine the overall context 214 of FIG. 2 associated with the content-of-interest 206. The surrounding-context module 514 can determine the overall context 214 by identifying factors and matching them to patterns or groupings as predetermined by the computing system 100.

For example, the surrounding-context module 514 can identify factors such as information regarding the content-of-interest 206, including the start time(211) of FIG. 2, the interest rating 212, title, metadata, description, or a combination thereof, current time, association or relationship between people near the user 203, or a combination thereof. The surrounding-context module 514 can compare the identified factors to predetermined groupings of factor values for determining the overall context 214.

The surrounding-context module 514 can adjust the interest rating 212. For example, the surrounding-context module 514 can increase the interest rating 212 for playoff or championship games or matches for sporting events, for games or matches occurring less than once a year, such as for Olympics or World Cup soccer, or a combination thereof. Also for example, the surrounding-context module 514 can increase the interest rating 212 for a finale for a show but decrease for reruns or shows previously seen by the user 203 as indicated by the user-profile 216.

The surrounding-context module 514 can use the first control unit 322, the second control unit 334, the host control unit 434, the first communication unit 316, the second communication unit 336, the host communication unit 436, or a combination thereof to determine the overall context 214 or adjust the interest rating 212. The surrounding-context module 514 can store the overall context 214, the interest rating 212, or a combination thereof in the first storage unit 314, the second storage unit 346, the host storage unit 446, or a combination thereof.

The activity module 516 is configured to determine the user-activity 220 of FIG. 2. The activity module 516 can determine the user-activity 220 from interactions of the user 203 with the first device 102, the second device 106, the host device 108, or a combination thereof. The activity module 516 can determine the interactions with the first user interface 318, the second user interface 338, the host user interface 438, or a combination thereof. For example, the activity module 516 can determine the user-activity 220 from the applications, websites, documents, input or output data, or a combination thereof accessed or generated by the user 203.

The activity module 516 can further determine the user-activity 220 from the user's schedule calendar. The activity module 516 can determine the user-activity 220 as the event or task scheduled on the user's schedule calendar for the current time.

The activity module 516 can also determine the user-activity 220 based on the user-location 218. The activity module 516 can compare the user-location 218 to a location corresponding to the event or task scheduled on the user's schedule calendar for the current time. The activity module 516 can determine the user-activity 220 as the event or task scheduled on the user's schedule calendar when the user-location 218 matches the location corresponding to the event or task scheduled on the user's schedule calendar.

The activity module 516 can be further configured to determine the user-context 222 and the user-attention measure 224 for the user-activity 220. The activity module 516 can determine the user-context 222 using similar method as the surrounding-context module 514. The activity module 516 can determine the user-context 222 by identifying factors and matching them to patterns or groupings as predetermined by the computing system 100.

For example, the activity module 516 can identify information regarding the user-activity 220, including the user-location 218, current time, the data from user interactions, other people near the user 203 and their relationship to the user 203, information from the user's calendar, or a combination thereof. The activity module 516 can compare the identified factors to predetermined groupings of factor values for determining the user-context 222.

The activity module 516 can determine the user-activity 220 first and use the determined instance of the user-activity 220 to determine the user-context 222. The activity module 516 can further determine the user-activity 220 and the user-context 222 simultaneously.

The activity module 516 can determine an association between the user-context 222 and the content-of-interest 206. The activity module 516 can determine the user-context 222 to be associated with the content-of-interest 206 when the overall context 214 and the user-context 222 share more than a predetermined number of identified factors contributing to the contextual determination.

The activity module 516 can further determine the user-context 222 to be associated with the content-of-interest 206 when the identified factors are related to the content-of-interest 206. For example, the user 203 following a route leading to a house holding a party for the content-of-interest 206 or the user 203 writing about the content-of-interest 206 can indicate the association between the user-activity 220 and the content-of-interest 206.

The activity module 516 can also determine the user-context 222 to be associated of the content-of-interest 206 based on the user-location 218. For example, the activity module 516 can determine the user-context 222 to be independent and unrelated to the content-of-interest 206 having entertainment purpose when the user-location 218 is work, but associated thereto when the user-location is home.

The activity module 516 can determine the user-attention measure 224 for the user-activity 220 using the first user interface 318, the second user interface 338, the host user interface 438, or a combination thereof. For example, the activity module 516 can determine the user-attention measure 224 using an elapsed time since the last input data. The user-attention measure 224 can indicate less attention to the user-activity 220 as the elapsed time increases.

Also for example, the activity module 516 can determine the user-attention measure 224 using physical indications of the user 203. The activity module 516 can use the camera on one or more devices to determine the user's posture, movement speed, orientation of the torso or the face, or a combination thereof. The activity module 516 can determine the relationship of the physical indications to the user-activity 220.

As a more specific example, the activity module 516 can use the camera on the laptop being used to conduct the user-activity 220 to determine the user's physical indications. The activity module 516 can determine the user-attention measure 224 as a function of orientation of the user's face or torso, user's hand position, user's posture or facial expression, or a combination thereof relative to the screen of the laptop, a duration for the determined physical indications or from last input data from the user 203, or a combination thereof.

The activity module 516 can determine the user-attention measure 224 relative to the content-of-interest 206. The activity module 516 can determine the user-attention measure 224 to have a direct relationship with the content-of-interest 206 when the user-context 222 or the user-activity 220 is associated with the content-of-interest 206. The activity module 516 can determine the user-attention measure 224 to have an inverse relationship with the content-of-interest 206 when the user-context 222 or the user-activity 220 is not associated with the content-of-interest 206.

The activity module 516 can also determine the user-attention measure 224 relative to the content-of-interest 206 based on physical indications of the user 203 relative to the content-of-interest 206. The activity module 516 can determine the user-attention measure 224 relative to the content-of-interest 206 by determining the user-attention measure 224 relative to a device used for accessing the content-of-interest 206.

For example, the activity module 516 can determine the user-attention measure 224 to be low for the user-activity 220 and focused on the content-of-interest 206 based on the user's face, torso, body posture, or a combination thereof facing the device displaying the content-of-interest 206 as determined using one or more cameras on the first device 102, the second device 106, the host device 108, or a combination thereof. Also for example, the activity module 516 can use, duration for the orientation, facial expression, detected sounds, or a combination thereof to the user-attention measure 224 relative to the content-of-interest 206.

The activity module 516 can further use the first control unit 322, the second control unit 334, the host control unit 434, or a combination thereof to process the information for determining the user-activity 220, the user-context 222, the user-attention measure 224, other related information, or a combination thereof. The activity module 516 can store the determined results in the first storage unit 314, the second storage unit 346, the host storage unit 446, or a combination thereof.

After determining contextual information, the control flow can pass to the notification module 510. The control flow can pass similarly as described above between the profile module 502 and the content analysis module 504, but using the determined values, such as the user-activity 220, the user-context 222, the user-attention measure 224, or a combination thereof.

The notification module 510 is configured to inform the user 203 regarding the content 204. The notification module 510 can recognize a notification scenario for generating the active-content notification 232. The notification module 510 can recognize the notification scenario based on the start time(211), the interest rating 212, the overall context 214, the user-context 222, the user-attention measure 224, or a combination thereof.

The notification module 510 can include the notification scenario as various groupings of factors or values for the start time(211), the interest rating 212, the overall context 214, the user-context 222, the user-attention measure 224, or a combination thereof for determining whether or not to notify the user 203. For example, the computing system 100 can notify the user 203 when the start time(211) is within a threshold amount of time from the current time, when the content break 208 or the idle portion 210 is set to end within a different threshold amount of time from the current time, or a combination thereof.

Also for example, the computing system 100 can notify the user 203 based on a result of a preset method involving the interest rating 212, the overall context 214, the user-context 222, the user-attention measure 224, or a combination thereof. As a more specific example, the computing system 100 can notify the user 203 according to an equation or a method, such as when the interest rating 212 is over a threshold level, the overall context 214 involves work or client related, when the user-attention measure 224 indicates over a threshold amount of focus on the user-activity 220, or a combination thereof.

For the further example, the computing system 100 can compare the user-context 222, the overall context 214, and the interest rating 212 for notifying the user 203. As a more specific example, the computing system 100 can notify the user 203 only if the interest rating 212 is at the highest level when the user-context 222 indicates professional settings and the overall context 214 indicates personal settings. As a further specific example, the computing system 100 can always notify the user 203 when the overall context 214 indicates a professional setting.

The notification module 510 can further include a device selection module 518, a mechanism selection module 520, and an alert module 522 for informing the user 203. The notification module 510 can use the sub-modules when the various input data matches the notification scenario as predetermined by the computing system 100.

The device selection module 518 is configured to determine the alert device identification 234. The device selection module 518 can determine the alert device identification 234 of FIG. 2 based on the viewing area 226, the user-location 218, the overall context 214, the user-context 222, the user-activity 220, the user-attention measure 224, the user-profile 216, or a combination thereof.

The device selection module 518 can determine the alert device identification 234 by selecting a suitable device for informing the user 203. The device selection module 518 can determine the suitable device based on the viewing area 226, the user-location 218, the overall context 214, the user-context 222, the user-activity 220, the user-attention measure 224, or a combination thereof.

For example, the device selection module 518 can determine the suitable device as the device accessing the content-of-interest 206 when the user 203 is in the viewing area 226 and the computing system 100 has determined the user-presence 230. Also for example, the device selection module 518 can determine the suitable device as the device currently being used to interface with the user 203.

For further example, the device selection module 518 can determine the suitable device as the first device 102 when the first device 102 is on the user's person, such as indicated by movement patterns of the first device 102, data from the interface, the overall context 214, the user-context 222, or a combination thereof. Also for example, the device selection module 518 can determine the suitable device as the second device 106 when the user-location 218 is within a threshold distance from the second device 106 or specific locations relative to the second device 106 as predetermined by the computing system 100.

As a more specific example, the device selection module 518 can determine the smart phone or the smart glasses as the suitable device when the input or output data for such device indicates that it is on the user's person. Also, the device selection module 518 can determine a smart light bulb, a household appliance, or a combination thereof as the suitable device when the user-location 218 is determined to be near the suitable device according to the threshold distance predetermined by the computing system 100.

Moreover, the device selection module 518 can determine the suitable device based on contextual information. For example, the device selection module 518 can determine the suitable device to be the first device 102 on the user's person when the second device 106 is in a shared or public setting, is to be used in the work or official context, is for a work-related content, or a combination thereof and the content-of-interest 206 is of personal or confidential nature.

The device selection module 518 can determine the alert device identification 234 by identifying the first device 102, the second device 106, the host device 108, or a combination thereof determined as the suitable device for informing the user 203 regarding the content 204. The device selection module 518 can select the device to be used for informing the user by determining the corresponding identification information as the alert device identification 234. For example, the device selection module 518 can determine the device identification, the phone number, access or networking information, the URL, or a combination thereof corresponding to the suitable device to be used for informing the user.

The device selection module 518 can include methods, combinations, corresponding selections for devices, or a combination thereof predetermined by the computing system 100 for determining the alert device identification 234. The device selection module 518 can use the first control unit 322, the second control unit 334, the host control unit 434, or a combination thereof to determine the alert device identification 234. The device selection module 518 can store the alert device identification 234 in the first storage unit 314, the second storage unit 346, the host storage unit 446, or a combination thereof.

The mechanism selection module 520 is configured to determine the alert mechanism 236 of FIG. 2. The mechanism selection module 520 can determine the alert mechanism 236 similar to the device selection module 518 determining the alert device identification 234. For example, the mechanism selection module 520 can determine the alert mechanism 236 based on the viewing area 226, the user-location 218, the overall context 214, the user-context 222, the user-activity 220, the user-attention measure 224, the user-profile 216, the alert device identification 234, or a combination thereof.

The mechanism selection module 520 can determine the alert mechanism 236 by selecting a mechanism, a method, an application, or a combination thereof suitable for informing the user 203. The mechanism selection module 520 can determine a suitable mechanism based on the viewing area 226, the user-location 218, the overall context 214, the user-context 222, the user-activity 220, the user-attention measure 224, or a combination thereof.

For example, the mechanism selection module 520 can determine the alert mechanism 236 as the method or application having visible or audible capabilities when the overall context 214, the user-context 222, the user-activity 220, or a combination thereof overlap, are of personal nature, or a combination thereof as determined by the context module 508. Also for example, the mechanism selection module 520 can determine the alert mechanism 236 as having silent or relatively smaller or simpler display notification when the user-location 218 is at a work place or a public place, or when the overall context 214, the user-context 222, or the user-activity 220 do not overlap.

For further example, the mechanism selection module 520 can determine the alert mechanism 236 as a method or application visually displaying alerts when the user-attention measure 224 is above a threshold predetermined by the computing system 100 related to the user-activity 220 involving the device corresponding to the alert device identification 234. Also for example, the mechanism selection module 520 can determine the alert mechanism 236 as a method or application audibly communicating alerts when the user 203 is not attentive towards the device corresponding to the alert device identification 234 as indicated by the user-activity 220, the user-attention measure 224, or a combination thereof.

The mechanism selection module 520 can include methods, combinations, device selections, corresponding selections for methods or applications, or a combination thereof predetermined by the computing system 100 for determining the alert mechanism 236. The mechanism selection module 520 can use the first control unit 322, the second control unit 334, the host control unit 434, or a combination thereof to determine the alert mechanism 236. The mechanism selection module 520 can store the alert mechanism 236 in the first storage unit 314, the second storage unit 346, the host storage unit 446, or a combination thereof.

The alert module 522 is configured to determine the alert magnitude 238 of FIG. 2 and generate the active-content notification 232 of FIG. 2. The alert module 522 can determine the alert magnitude 238 similar to determining the alert device identification 234 or the alert mechanism 236. For example, the alert module 522 can determine the alert magnitude 238 based on the viewing area 226, the user-location 218, the overall context 214, the user-context 222, the user-activity 220, the user-attention measure 224, the user-profile 216, the alert device identification 234, the alert mechanism 236, or a combination thereof.

The alert module 522 can determine the alert magnitude 238 by selecting a strength level, such as for volume or a repeat interval, suitable for informing the user 203 based on various factors. For example, the alert module 522 can determine the alert magnitude 238 to be directly related to the user-attention measure 224, to provide more noticeable alerts when the user 203 is focused on the user-activity 220, when the user-context 222 is unrelated to the overall context 214, when the user-activity 220 involves a device different from a separate device for accessing the content-of-interest 206, when the user-activity 220 involves a device different from a device corresponding to the alert device identification 234, or a combination thereof.

Also for example, the alert module 522 can determine the alert magnitude 238 to be inversely related to the user activity, to provide less noticeable alerts when the user 203 is focused on the user-activity 220, when the user-context 222 is related to the overall context 214, when the user-activity 220 involves the device for accessing the content-of-interest 206, when the user-activity involves the device corresponding to the alert device identification 234, or a combination thereof. The alert magnitude 238 need not be very high if the user 203 is already focused on the device that will provide the alert.

The alert module 522 can generate the active-content notification 232 by displaying an image, a letter, a symbol, a number, or a combination thereof, by audibly recreating a sound, by causing a physical movement in a device or a portion therein, or a combination thereof. The alert module 522 can generate the active-content notification 232 at the device corresponding to the alert device identification 234, using the alert mechanism 236, having the alert magnitude, or a combination thereof for notifying the user 203 regarding starting or resuming of the content-of-interest 206.

The alert module 522 can generate the active-content notification 232 based on the user-attention measure 224, the idle portion 210, the content break 208, the overall context 214, the user-context 222, the interest rating 212, or a combination thereof. For example, the alert module 522 can generate the active-content notification 232 when the user-attention measure 224 is below a threshold measure, the start time(211) within a threshold duration from the current time, the content break 208 or the idle portion 210 is estimated or scheduled to end within a different duration from the current time, or a combination thereof. The computing system 100 can predetermine the various methods, thresholds, or a combination thereof for processing the active-content notification 232.

Also for example, the alert module 522 can generate the active-content notification 232 based on comparing the overall context 214, the user-context 222, the interest rating 212, or a combination thereof to each other or to other various predetermined grouping of scenarios. As a more specific example, the alert module 522 can include groupings of values describing various contextual situation for generating the active-content notification 232.

Continuing with the example, the groupings of values can include the overall context 214 involving a presentation scheduled to be given by the user 203, important work related context for the content 204, highest rating for the interest rating, or a combination thereof. The alert module 522 can include groupings of values corresponding to contextual situations as predetermined by the computing system 100.

It has been discovered that the active-content notification 232 based on the overall context 214, the user-context 222, the interest rating 212, the alert device identification 234, the alert mechanism 236, and the alert magnitude 238 provide relevancy and contextual appropriateness for the computing system 100. The active-content notification 232 can be contextually appropriate with the use of the overall context 214 and the user-context 222 and be relevant to the user through the user of the interest rating 212. Further, the method for notifying the user can be context sensitive through appropriately assigning the alert device identification 234, the alert mechanism 236, and the alert magnitude 238 based on the contextual factors.

It has further been discovered that the active-content notification 232 based on the user-attention measure 224, the alert device identification 234, the alert mechanism 236, and the alert magnitude 238 provide enhanced noticeability and effectiveness for the computing system 100. The active-content notification 232 can be adjusted through the alert device identification 234, the alert mechanism 236, and the alert magnitude 238 corresponding to the user-attention measure 224, and provide appropriate alerts that will more likely be noticed by the user 203.

It has also been discovered that the active-content notification 232 based on the content break 208, the idle portion 210, and the viewing area 226 provide flexibility for the computing system 100. The active-content notification 232 can be given based on start or end of the idle portion 210 or the content break 208 and not be limited to the start time(211).

The alert module 522 can use the first user interface 318, the second user interface 338, the host user interface 438, the first communication unit 316, the second communication unit 336, the host communication unit 436, or a combination thereof to generate the active-content notification 232. The alert module 522 can use the first control unit 322, the second control unit 334, the host control unit 434, or a combination thereof to process the active-content notification 232.

After generating the active-content notification 232 and determining details associated therewith, the control flow can pass to viewing assistance module 512. The control flow can pass similarly as described above between the profile module 502 and the content analysis module 504, but using the active-content notification 232 or the details associated therewith.

The viewing assistance module 512 is configured to adjust settings related to accessing the content-of-interest 206. The viewing assistance module 512 can include a channel control module 524 and a playback module 526.

The channel control module 524 is configured to adjust settings on the first device 102, the second device 106, the host device 108, or a combination thereof for contemporaneously accessing the content-of-interest 206. The channel control module 524 can be configured to implement the content-view setting 242 of FIG. 2 for adjusting the device setting 244 of FIG. 2 to display the content-of-interest 206.

For example, the channel control module 524 can initiate an application, change or set the channel, adjust sound settings, adjust display settings, or a combination thereof to access the content-of-interest 206 through the device corresponding to the alert device identification 234 or a separate device from the first device 102, the second device 106, the host device 108, or a combination thereof. The adjustments can be for accessing the content-of-interest 206 right away or contemporaneous to completing the adjustments.

It has been discovered that the active-content notification 232 and the content-view setting 242 provide an enhanced viewing experience for the user 203. The active-content notification 232 and the content-view setting 242 can allow the user 203 to view other instances of the content 204 during the content break 208 or the idle portion 210 without missing the portions relevant to the content-of-interest 206. The computing system 100 can generate the active-content notification 232 or adjust settings according to the content-view setting 242 to ensure that the portions relevant to the content-of-interest 206 are not missed.

The channel control module 524 can implement the adjustments by sending control signals to the target device, adjusting the settings or values in the target device, or a combination thereof. The channel control module 524 can use the first communication unit 316, the second communication unit 336, the host communication unit 436, the first control unit 322, the second control unit 334, the host control unit 434, or a combination thereof to implement the adjustments.

The playback module 526 is configured to adjust settings on the first device 102, the second device 106, the host device 108, or a combination thereof for accessing the content-of-interest 206 based on user's availability. The playback module 526 can be configured to implement the content-delay setting 240 for delayed viewing of the content-of-interest 206.

For example, the channel control module 524 can initiate recording, contemporaneously playing the recorded instance of the content-of-interest 206 without the content break 208 and idle portion 210, storing or deleting the recorded instance of the content-of-interest 206, switching to the content-of-interest 206 as it becomes available when the user 203 catches up to current broadcast, or a combination thereof. The adjustments can be for accessing the content-of-interest 206 when the user 203 is not in the viewing area 226 at or around the start time(211).

It has been discovered that the active-content notification 232 and the content-delay setting 240 provide smooth and enhanced viewing experience for the user 203. The content-delay setting 240 and the active-content notification 232 can allow the user 203 to view all relevant portions of the content-of-interest 206 even if the user 203 is not able to be in the viewing area 226 when the content-of-interest 206 starts or resumes. The content-delay setting 240 and the active-content notification 232 can further allow the user 203 to skip irrelevant portions of the content-of-interest 206 to catch up to the current progress of the content-of-interest 206 as it becomes available.

The computing system 100 has been described with module functions or order as an example. The computing system 100 can partition the modules differently or order the modules differently. For example, functions of the tracking module 506 and the context module 508 can be combined. Also for example, the content analysis module 504 and the tracking module 506 can execute in parallel or sequential configuration to each other.

The modules described in this application can be hardware implementation or hardware accelerators having active circuitry, passive circuitry, or a combination thereof in the first control unit 316 or in the second control unit 338. The modules can also be hardware implementation or hardware accelerators having active circuitry, passive circuitry, or a combination thereof within the first device 102 or the second device 106 but outside of the first control unit 316 or the second control unit 338, respectively.

The physical transformation from the active-content notification 232 results in the movement in the physical world, such as the user interacting with the content-of-interest 206, controlling one or more devices in the computing system 100, changing a task engaged by the user 203, or a combination thereof. Movement in the physical world results in changes to the user-profile 216, the user-activity 220, devices involved therein, the user-attention measure 224, or a combination thereof, which can be used to further generate the active-content notification 232 according to a device, manner, or level appropriately corresponding to the changes in the situation or environment.

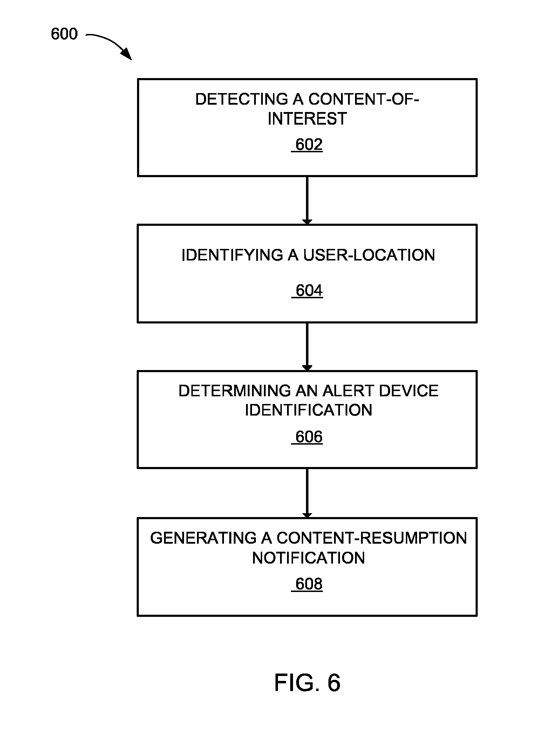

Referring now to FIG. 6, therein is shown a flow chart of a method 600 of operation of a computing system 100 in an embodiment of the present invention. The method 600 includes: detecting a content-of-interest in a block 602; identifying a user-location relative to the content-of-interest in a block 604; determining an alert device identification based on a viewing area and the user-location for accessing a device in a block 606; and generating an active-content notification with the alert device identification regarding the content-of-interest for displaying on the device in a block 608.

It has been discovered that the active-content notification 232 based on the overall context 214, the user-context 222, the interest rating 212, the alert device identification 234, the alert mechanism 236, and the alert magnitude 238 provide relevancy and contextual appropriateness for the computing system 100. It has further been discovered that the active-content notification 232 based on the user-attention measure 224, the alert device identification 234, the alert mechanism 236, and the alert magnitude 238 provide enhanced noticeability and effectiveness for the computing system 100.

It has also been discovered that the active-content notification 232 based on the content break 208, the idle portion 210, and the viewing area 226 provide flexibility for the computing system 100. Moreover, it has been discovered that the active-content notification 232, the content-view setting 242, and the content-delay setting 240 provide an enhanced viewing experience for the user 203.

The resulting method, process, apparatus, device, product, and/or system is straightforward, cost-effective, uncomplicated, highly versatile, accurate, sensitive, and effective, and can be implemented by adapting known components for ready, efficient, and economical manufacturing, application, and utilization. Another important aspect of an embodiment of the present invention is that it valuably supports and services the historical trend of reducing costs, simplifying systems, and increasing performance.

These and other valuable aspects of an embodiment of the present invention consequently further the state of the technology to at least the next level.

While the invention has been described in conjunction with a specific best mode, it is to be understood that many alternatives, modifications, and variations will be apparent to those skilled in the art in light of the a foregoing description. Accordingly, it is intended to embrace all such alternatives, modifications, and variations that fall within the scope of the included claims. All matters set forth herein or shown in the accompanying drawings are to be interpreted in an illustrative and non-limiting sense.

## Claims

1. A computing system comprising:
a content analysis module configured to detect a content-of-interest;
a tracking module, coupled to the content analysis module, configured to identify a user-location relative to the content-of-interest;
a device selection module, coupled to the tracking module, configured to determine an alert
device identification based on a viewing area and the user-location for accessing a device; and
an alert module, coupled to the device selection module, configured to generate an active-content notification with the alert device identification regarding the content-of-interest for displaying on the device.

2. The system as claimed in claim 1 further comprising:
an activity module, coupled to the tracking module, configured to determine a user-attention
measure relative to the content-of-interest; and wherein:
the alert module is configured to generate the active-content notification based on the user-attention measure.

3. The system as claimed in claim 1 wherein:
the content analysis module is configured to determine an idle portion of the content-of-interest; and
the alert module is configured to generate the active-content notification based on the idle
portion.

4. The system as claimed in claim 1 further comprising a mechanism selection module, coupled to the device selection module, configured to determine an alert mechanism for generating the active-content notification.

5. The system as claimed in claim 1 further comprising:
a playback module, coupled to the alert module, configured to implement a content-delay
setting for delayed viewing of the content-of-interest; and
wherein:
the content analysis module is configured to identify a content break, an idle portion, or a
combination thereof for the content-of-interest for eliminating the content break, the idle portion, or a combination thereof during the delayed viewing of the content-of-interest.

6. The system as claimed in claim 1 further comprising:
a surrounding-context module, coupled to the tracking module, configured to determine an overall context associated with the content-of-interest; and
wherein:
the alert module is configured to generate the active-content notification based on the overall context.

7. The system as claimed in claim 6 further comprising:
an activity module, coupled to the tracking module, configured to determine a user-context associated with the content-of-interest; and
wherein:
the alert module is configured to generate the active-content notification based on comparing the user-context and the overall context.

8. The system as claimed in claim 6 wherein the alert module is configured to determine an alert magnitude based on the overall context for generating the active-content notification.

9. The system as claimed in claim 6 further comprising a mechanism selection module, coupled to the device selection module, configured to determine an alert mechanism based on the overall context for generating the active-content notification.

10. The system as claimed in claim 6 further comprising a channel control module, coupled to the alert module, configured to implement a content-view setting for adjusting a device setting to display the content-of-interest.

11. A method of operation of a computing system comprising:
detecting a content-of-interest;
identifying a user-location relative to the content-of-interest;
determining an alert device identification based on a viewing area and the user-location for accessing a device; and
generating an active-content notification with the alert device identification regarding the content-of-interest for displaying on the device.

12. The method as claimed in claim 11 further comprising:
determining a user-attention measure relative to the content-of-interest; and
wherein:
generating the active-content notification includes generating the active-content notification based on the user-attention measure.

13. The method as claimed in claim 11 further comprising:
determining an idle portion of the content-of-interest; and
wherein:
generating the active-content notification includes generating the active-content notification based on the idle portion.

14. The method as claimed in claim 11 wherein generating the active-content notification includes determining an alert mechanism for generating the active-content notification.

15. A non-transitory computer readable medium comprising:
detecting a content-of-interest;
identifying a user-location relative to the content-of-interest;
determining an alert device identification based on a viewing area and the user-location for accessing a device; and
generating an active-content notification with the alert device identification regarding the content-of-interest for displaying on the device.
